# EUROPÄISCHE PATENTSCHRIFT

(11) **EP 3 097 400 B1**
(45) Veröffentlichungstag und Bekanntmachung des Hinweises auf die Patenterteilung: **04.10.2017**
(21) Anmeldenummer: 15701732.8
(22) Anmeldetag: 21.01.2015
(51) Int. Cl.: G01N 17/00, H05B 33/08, H05B 37/02, G01N 1/44

(54) **VERFAHREN ZUR STEUERUNG EINER BELEUCHTUNGSANORDNUNG**
METHOD FOR CONTROLLING A LIGHTING ASSEMBLY
PROCÉDÉ DE COMMANDE D'UN SYSTÈME D'ÉCLAIRAGE

(30) Priorität: 22.01.2014 DE 102014201124
(43) Veröffentlichungstag der Anmeldung: 30.11.2016
(73) Patentinhaber: Zumtobel Lighting GmbH, 6850 Dornbirn (AT)
(72) Erfinder: FROHNAPFEL, Anja, 6850 Dornbirn (AT)
(74) Vertreter: Kiwit, Benedikt
(86) Internationale Anmeldenummer: PCT/EP2015/051129
(87) Internationale Veröffentlichungsnummer: WO 2015/110466

(56) Entgegenhaltungen:
- EP-A1- 2 682 739
- US-A- 5 220 840
- "DIN 53952; Richtlinien für die Bestimmung der Farbechtheit von Textilien. Bestimmung der Lichtechtheit von Faerbungen, Drucken und Farbstoffen", DEUTSCHE NORMEN. DIN NORM,, Bd. 53952, 31. Januar 1954 (1954-01-31), Seite 2pp, XP009185134,
- Sue Winckle: "Testing Materials for Light Fastness", SATRA Spotlight, 30. Juni 2007 (2007-06-30), Seiten 12-13, XP055199573, Gefunden im Internet: URL:http://www.satra.co.uk/spotlight/downl oad.php?file=spot_0607_light_fastness_test ing.pdf [gefunden am 2015-07-01]

## Beschreibung

### 1. Gebiet der Erfindung

Die vorliegende Erfindung betrifft ein Verfahren zur Steuerung einer Beleuchtungsanordnung, insbesondere einer Beleuchtungsanordnung zur Beleuchtung einer Warenpräsentationsfläche, sowie eine Anordnung zur Durchführung eines solchen Verfahrens.

### 2. Hintergrund

Im Stand der Technik ist bekannt, dass Produkte oder Gegenstände, die mit Licht (z.B. von einer künstlichen Beleuchtung oder der Sonne) bestrahlt werden, einem gewissen Alterungsprozess unterliegen. Dabei verändert sich häufig die Farbe der Produkte nachteilig, da diese je nach Material zu einem mehr oder weniger ausgeprägten Ausbleichen neigen.

Ein Kennwert, der die Neigung von Materialien (z.B. von Stoffen und Textilien) hinsichtlich einer Farbveränderung, insbesondere zu einem Ausbleichen, aufgrund einer Lichteinwirkung klassifiziert, ist die sogenannte Lichtechtheit. Diesbezüglich wird insbesondere der so genannte *"Blaumaßtab"* nach DIN 53952 herangezogen, mit dem die Lichtechtheit (also die Farbkonstanz) eines Stoffes bzw. eines Materials quantifiziert werden kann.

Das Messverfahren im Rahmen der DIN 53952 besteht dabei in einem Vergleich einer Probe mit einer Skala aus acht blauen Wollstreifen (so genannte *"Wollskala"*), die jeweils eine unterschiedliche vordefinierte Lichtechtheit aufweisen. Dabei werden sowohl die Probe als auch die Wollstreifen einer Lichtstrahlung ausgesetzt. Die belichtete Probe wird anschließend mit einem (abgedeckten) Referenzteil der Wollstreifen verglichen. Als Lichtechtheit wird dann diejenige Stufe angegeben, bei der ein *"deutlicher"*bzw. *"gerade erkennbarer"* Unterschied gegeben ist. Dabei wird in der DIN 53952 zwischen einer Lichtechtheit 1 (*"sehr gering"*) bis zu einer Lichtechtheit 8 (*"hervorragend"*) skaliert.

In der Praxis hat sich gezeigt, dass Waren oder Produkte, die auf einer beleuchteten Fläche (insbesondere einer Warenpräsentationsfläche) ausgestellt werden, teilweise sehr geringe Lichtechtheitswerte (insbesondere einige Textilienarten) aufweisen und daher durch eine Beleuchtung erheblich beeinträchtigt werden können. Die Patentschrift US 5,220,840 offenbart eine Anordnung zur Bestimmung der Lichtbeständigkeit eines Musters. Die vorliegende Erfindung stellt sich nunmehr die Aufgabe, ein Verfahren zur Ansteuerung einer Beleuchtungsanordnung bereitzustellen, mit dem verhindert werden kann, dass die ausgestellten Waren (insbesondere Textilien) zu sehr ausbleichen, selbst wenn diese einen nur geringen Lichtechtheitswert aufweisen.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### 3. Ausführliche Beschreibung der Erfindung

Ein erfindungsgemäßes Verfahren zur Steuerung einer Beleuchtungsanordnung, insbesondere einer Beleuchtungsanordnung zur Beleuchtung einer Warenpräsentationsfläche, umfasst zumindest die folgenden Schritte:
- Bereitstellen der Beleuchtungsanordnung;
- Bereitstellen eines Musters;
- Bereitstellen einer Messanordnung zur Messung von Farbveränderungen des Musters aufgrund der Lichteinwirkungen durch die Beleuchtungsanordnung in dem von der Beleuchtungsvorrichtung zu beleuchtenden Bereich, umfassend eine Sensoranordnung, die geeignet ist, eine Farbveränderung des Musters zu ermitteln;
- Anordnen des Musters derart, dass das Muster dem Licht der Beleuchtungsanordnung ausgesetzt wird;
- Ermitteln der Farbveränderung des Musters durch die Sensoranordnung, nachdem das Muster dem Licht der Beleuchtungsanordnung einer vorbestimmten Dauer ausgesetzt wurde;
- Ansteuern der Beleuchtungsanordnung in Abhängigkeit der durch die Messanordnung ermittelten Farbveränderung des Musters.

Die Sensoranordnung umfasst dabei zumindest einen geeigneten Farbsensor (beispielsweise: einen LAB-Farbsensor, True-Color-Sensor oder RGB-Sensoren).

Vorzugsweise umfasst die Sensoranordnung zumindest eine Speicher- und Rechnereinheit, mit der die Werte/Ergebnisse einer Farbmessung gespeichert werden können. Dadurch besteht die Möglichkeit zu einem ersten Zeitpunkt eine erste Farbmessung - bspw. des noch nicht beleuchteten Musters - vorzunehmen, diese mit den Werten/Ergebnissen einer späteren zweiten Farbmessung (des Musters) zu vergleichen, um dadurch eine aufgetretene Farbveränderung (insbesondere einen Farbortabstand) im Zeitraum zwischen der ersten und der zweiten Farbmessung bestimmen zu können.

Alternativ oder zusätzlich besteht auch die Möglichkeit, die Beleuchtungsschädlichkeit derart zu ermitteln, dass das Muster (beispielsweise ein Muster mit einem oder mehreren Einzelbereichen) zumindest teilweise abgedeckt wird und nur ein Teil des Musters der Beleuchtung ausgesetzt wird, so dass im abgedeckten Bereich keine bzw. keine Wesentliche Farbveränderung auftritt. Dieser (unveränderte) Bereich kann anschließend mit dem Bereich, der der Beleuchtung ausgesetzt wurden, verglichen werden, wobei beide Farbmessungen (d.h. die Farbmessung des abgedeckten Bereichs und die Farbmessung des nicht abgedeckten Bereichs) zu einem Zeitpunkt erfolgen kann.

Auch besteht die Möglichkeit, insbesondere anstatt des vorhergehend beschriebenen Abdeckens eines Teils eines Musters, mehrere farbgleiche Muster zu verwenden, d.h. ein Muster zu beleuchten und dieses beleuchtete Muster mit einem weiteren, nicht beleuchteten Muster (quasi als Referenzmuster/-objekt) zu vergleichen.

Weiterhin besteht die Möglichkeit ein bekanntes bzw. vordefiniertes Muster (also ein Muster mit bekannten Ausgangsfarbwerten/ Ausgangsfarborten) zu verwenden. Dabei können die Ausgangsfarbwerte/-orte dieser bekannten bzw. vordefinierten Muster in der Speicher- und Rechnereinheit der Sensoranordnung (bzw. alternativ in der Beleuchtungsanordnung und/oder in einer zentralen Rechnereinheit, etc.) als Referenzwerte gespeichert vorliegen. Diese Vorgehensweise hat den Vorteil, dass nur eine Farbmessung vorgenommen werden muss, nämlich eine Farbmessung des beleuchteten Musters und diese Farbmessung mit den gespeicherten (bekannten Ausgangsfarbwerten) verglichen werden kann, um eine Farbveränderung (insbesondere den Farbortabstand) zu ermitteln.

Ferner kann es von Vorteil sein, ein standardisiertes Muster, insbesondere ein Textilmuster bzw. ein standardisiertes Papiermuster zu verwenden, um beispielsweise die Beleuchtungsschädlichkeit der Beleuchtungsanordnung allgemein bestimmen zu können und eine Steuerung der Beleuchtungsanordnung im Hinblick auf eine Farbveränderung des standardisierten Musters vornehmen zu können. Vorzugsweise wird hierfür ein standardisiertes Blaumuster nach DIN 53952 eingesetzt.

Vorteilhafterweise wird die ermittelte Farbveränderung als Lichtechtheitswert nach dem Blaumaßstab gemäß DIN 53952 angegeben, wobei hierfür vorzugsweise die Farbwerte der Wollskala als Referenzwerte gespeichert werden, vorzugsweise in der Speicher- und Recheneinheit der Sensoreinheit (bzw. alternativ in der Beleuchtungsanordnung und/oder in einer zentralen Rechnereinheit, etc.). Alternativ oder zusätzlich - insbesondere wenn die Farbwerte der Wollskala nicht als Referenzwerte gespeichert sind - kann die Beleuchtungsschädlichkeit derart ermittelt werden, dass das standardisierte Blaumuster zumindest teilweise abgedeckt wird und nur ein Teil des Blaumusters der Beleuchtung ausgesetzt wird, so dass im abgedeckten Bereich keine bzw. keine Wesentliche Farbveränderung auftritt und diese (unveränderten) Bereiche mit den Bereichen, die der Beleuchtung ausgesetzt wurden, erfasst und verglichen werden können. Eine solche Vorgehensweise unter Verwendung eines standardisierten Blaumusters weist den Vorteil auf, dass die derart ermittelten Lichtechtheitswerte vergleichbar sind und somit beispielsweise bei der Konzeption und Planung von Beleuchtungen berücksichtigt werden können.

Wie bereits oben angeführt, definiert die DIN 53952 Lichtechtheitswerte in einer Skala zwischen einem Lichtechtheitswert von 1 (*"sehr gering"*) und einem Lichtechtheitswert von 8 (*"hervorragend"*)*.*

Alternativ insbesondere bezüglich der Verwendung eines bekannten oder standardisierten Musters, besteht auch die Möglichkeit, als Muster ein Textilmuster zu verwenden, das einem auf einer Warenpräsentationsfläche angeordneten Textil entspricht. Werden beispielsweise auf einer Warenpräsentationsfläche Jeans-Stoffe ausgestellt, kann ein solcher Jeans-Stoff in die Trägeranordnung der Messanordnung befestigt werden und eine Farbveränderung über einem bestimmten Zeitraum ermittelt werden. Dies hat den Vorteil, dass die Auswirkungen der Beleuchtung unmittelbar an den ausgestellten und beleuchteten Textilen erfasst und somit einer Steuerung der Beleuchtungsanordnung zugrundegelegt werden können. Auch hier besteht wiederum die Möglichkeit, die Farbveränderung durch zwei Farbmessungen bei unterschiedlichen Zeitpunkten zu ermitteln oder einen Teil des Textilmusters abzudecken und den abgedeckten (unveränderten) Bereich mit dem Bereich, der der Beleuchtung ausgesetzt wurden, zu vergleichen, wobei beide Farbmessungen (d.h. die Farbmessung des abgedeckten Bereichs und die Farbmessung des nicht abgedeckten Bereich) zu einem Zeitpunkt erfolgen kann.

Vorteilhafterweise wird eine Trägeranordnung in dem von der Beleuchtungsvorrichtung zu beleuchtenden Bereich zur Aufnahme des Musters bereitgestellt, wobei die Trägeranordnung vorzugsweise an der Messanordnung vorgesehen ist, wobei der Schritt zur Aufnahme des Musters ferner die Aufnahme des Musters auf der Trägeranordnung umfasst.

Unter einer Trägeranordnung kann dabei im Wesentlichen jede Anordnung verstanden werden, die zur Aufnahme eines Musters (insbesondere eines Textilmusters) geeignet ist und entsprechende Einklemm-, Arretier- oder Fixiermittel aufweist, mit dem das Muster an der Trägeranordnung befestigt werden kann.

Vorteilhafterweise umfasst die Ansteuerung der Beleuchtungsanordnung ein Einstellen des Lichtausstrahlungswinkels und/oder der Lichtintensität und/oder der Lichtverteilung. Basierend auf der ermittelten Farbveränderung des Musters (bzw. des Lichtechtheitswerts) kann die Beleuchtungsanordnung entsprechend angesteuert werden. Wird dabei beispielsweise festgestellt, dass die ermittelte Farbveränderung innerhalb eines vorbestimmten Zeitraums einen vorbestimmten Referenzwert überschreitet, kann insbesondere die Lichtflussdichte (Lichtintensität) des auf die beleuchtete Fläche abgestrahlten Lichts reduziert werden (beispielsweise durch eine Veränderung des Lichtausstrahlungswinkels oder durch eine Verringerung der Lichtintensität). Somit können beispielsweise sehr lichtempfindliche Waren (insbesondere bestimmte Textilien) vor einem Ausbleichen geschützt werden.

Vorzugsweise umfasst die Beleuchtungsanordnung mehrere Beleuchtungseinrichtungen, die zusammengefasst oder individuell angeordnet und angesteuert werden können.

In einer ersten Alternative wird die ermittelte Farbveränderung (bzw. der Lichtechtheitswert) des Musters von der Messanordnung an die Beleuchtungsanordnung übermittelt, wobei in diesem Fall eine Steuereinheit der Beleuchtungsanordnung die Beleuchtung in Abhängigkeit der ermittelten Farbveränderung ansteuert.

In einer zweiten Alternative kann die ermittelte Farbveränderung des Musters von der Messanordnung an eine zentrale Rechnereinheit übermittelt werden, wobei die zentrale Rechnereinheit die Beleuchtung der Beleuchtungsanordnung in Abhängigkeit der ermittelten Farbveränderung (bzw. des ermittelten Lichtechtheitswerts) ansteuert.

Die erste Alternative wird vorzugsweise dann eingesetzt, wenn die Beleuchtungsanordnung im Wesentlichen aus einer Beleuchtungseinrichtung aufgebaut ist. Die zweite Alternative wird demgegenüber vorzugsweise eingesetzt, wenn die Beleuchtungsanordnung mehrere (ggf. im Raum verteilte) anzusteuernde Beleuchtungseinrichtungen umfasst.

Wie bereits angemerkt, wird die Beleuchtungsanordnung vorzugsweise derart angesteuert, dass die Lichtflussdichte des auf die Waren gerichteten Lichts reduziert wird, wenn die ermittelte Farbveränderung einen vorbestimmten Referenzwert überschreitet. Die Lichtflussdichte kann dabei insbesondere durch die Lichtintensität oder durch die Lichtverteilung des von der Beleuchtungsanordnung abgestrahlten Lichts erfolgen.

Vorzugsweise umfassen die Beleuchtungsanordnung, die Messanordnung und/oder die zentrale Rechnereinheit jeweils zumindest eine Schnittstelle zur drahtlosen Kommunikation, mit der die ermittelte Farbveränderung drahtlose übertragen werden kann. Eine Kommunikation kann dabei zwischen wenigstens zweien der Beleuchtungsanordnung, der Messanordnung und der zentralen Rechnereinheit oder auch zwischen wenigstens einem der vorgenannten Vorrichtungen und einem externen Gerät, ebenfalls aufweisend eine Schnittstelle zur drahtlosen Kommunikation, erfolgen. Dadurch müssen bei der Installation der Messanordnung auf einer Fläche, insbesondere auf einer Warenpräsentationsfläche, keine Kabel oder dergleichen verlegt werden, so dass die Messanordnung schnell betriebsbereit ist und flexibel an den jeweiligen Flächen eingesetzt werden kann. Über ein externes Gerät (bspw. ein Smartphone vorzugsweise mit entsprechender App) können bspw. Daten aus dem System ausgelesen/empfangen oder an dieses gesendet werden.

Vorzugsweise umfasst die Beleuchtungsanordnung Leuchtdioden-Module, da diese relativ einfach mit einer entsprechenden Steuerungseinheit mit einer vergleichsweisen hohen Genauigkeit angesteuert werden können.

Die Erfindung betrifft ferner eine Anordnung zur Durchführung eines Verfahrens zur Steuerung einer Beleuchtungsanordnung, wobei die Anordnung folgendes umfasst:
- eine Beleuchtungsanordnung, vorzugsweise mit zumindest einem Leuchdioden-Modul;
- eine Messanordnung zur Messung von Farbveränderungen eines Musters aufgrund der Lichteinwirkungen durch die Beleuchtungsanordnung in dem von der Beleuchtungsvorrichtung zu beleuchtenden Bereich, umfassend eine Sensoranordnung, die geeignet ist, eine Farbveränderung des Musters zu bestimmen;
- eine Steuereinheit zum Ansteuern der Beleuchtungsanordnung in Abhängigkeit der durch die Messanordnung ermittelten Farbveränderung des Musters.

### 4. Beschreibung einer bevorzugten Ausführungsform

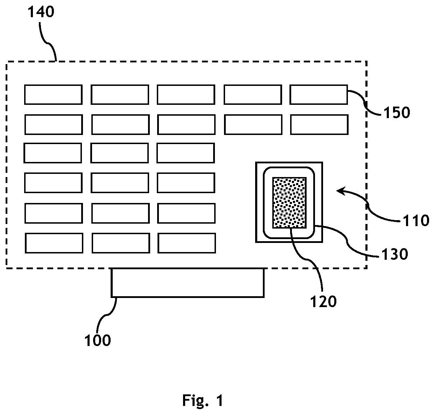

Nachfolgend wird eine detaillierte Beschreibung der einzigen Figur 1 gegeben, die eine schematische Ansicht einer erfindungsgemäßen Anordnung zur Durchführung eines erfindungsgemäßen Verfahrens zur Steuerung einer Beleuchtungsanordnung zeigt.

Figur 1 zeigt dabei eine schematische Ansicht einer erfindungsgemäßen Anordnung zur Durchführung eines erfindungsgemäßen Verfahrens. Die erfindungsgemäße Anordnung umfasst eine Beleuchtungsanordnung 100, vorzugsweise mit zumindest einem Leuchtdioden-Modul, eine Messanordnung 110 zur Messung von Farbveränderungen eines Textilmusters 120, das vorzugsweise in einer Trägeranordnung 130 der Messanordnung 110 fixiert ist.

Die Messanordnung 110 ist dabei auf einer Warenpräsentationsfläche 140 angeordnet, und zwar derart, dass das Textilmuster 120 dem Licht der Beleuchtung 100 ausgesetzt wird. Das Textilmuster 120 ist dabei vorzugsweise einer auf der Warenpräsentationsfläche 140 angeordneten Textilware 150 entnommen worden. Alternativ oder zusätzlich kann auch ein standardisiertes Muster (z.B. ein standardisiertes Wollmuster) verwendet werden, wobei das standardisierte Muster teilweise abgedeckt werden kann, so dass dieser abgedeckte (unveränderte) Bereich bei einem Vergleich der Farbveränderung als bzw. zusätzlich als Referenzbereich herangezogen werden kann.

Zur Ermittlung der Farbveränderung des Textilmusters 120 wird dabei zu einem ersten Zeitpunkt mit einer in der Messanordnung 110 angeordneten Sensorik (nicht gezeigt, beispielsweise eine Anordnung mit zumindest einem Farbsensoren, wie einem LAB-Farbsensor, einem True Color-Sensor oder einem RGB-Sensor) ein erster Farbwert gemessen und in einer Speicher- und Recheneinheit (nicht gezeigt) der Messanordnung 110 gespeichert.

Nach einem vorbestimmten Zeitintervall, beispielsweise nach einem Tag, erfolgt eine zweite Farbmessung an dem Textilmuster 120, so dass aus den beiden Farbmessungen eine Farbänderung innerhalb des Messintervalls durch einen Vergleich beider Messungen ermittelt werden kann. Alternativ kann auch eines der anderen zuvor beschriebenen Verfahren oder vergleichbare Verfahren durchgeführt werden.

Überschreitet die ermittelte Farbveränderung einen vordefinierten Referenzwert/Grenzwert, wird die Beleuchtungsanordnung 100 vorzugsweise derart angesteuert, dass die Lichtintensität, mit der die Beleuchtungsanordnung 100 die Warenpräsentationsfläche 140 bestrahlt, eingestellt (bspw. reduziert) wird.

Die Farbveränderung kann dabei auch als sogenannter Lichtechtheitswert nach dem Blaumaßstab nach DIN 53952 angegeben werden, wobei hierfür die notwendigen Farbwerte der in der DIN 53952 angegebenen Wollskala vorzugsweise in der Messanordnung 110 gespeichert sind. Alternativ oder zusätzlich kann die Wollskala auch teilweise abgedeckt werden, so dass dieser abgedeckte und somit unveränderte Bereich als Vergleichs- bzw. Referenzwert herangezogen werden kann. Die ermittelte Farbveränderung über den Messzeitraum wird mit der gespeicherten bzw. mit dem abgedeckten Bereich der Wollskala elektronisch verglichen, so dass ein entsprechender Lichtechtheitswert nach dem Blaumaßstab nach DIN 53952 angegeben werden kann.

Eine Steuerung der Beleuchtungsanordnung 100 kann beispielsweise durch eine drahtlose Kommunikation zwischen der Messanordnung 110 und der Beleuchtungsanordnung 100 erfolgen oder aber auch durch eine zentrale Rechnereinheit (nicht gezeigt), an die der Wert der ermittelten Farbveränderung bzw. der Lichtechtheitswert (vorzugsweise drahtlos) übertragen wird.

Die zentrale Rechnereinheit kann beispielsweise für die Ansteuerung verschiedener Beleuchtungsanordnungen auch auf Messungen von mehreren Messanordnungen zurückgreifen. Beispielsweise kann dabei die Steuerung mehrerer Beleuchtungsanordnungen derart erfolgen, dass mehrere Messungen von unterschiedlichen Messanordnungen an unterschiedlichen Orten zugrundegelegt werden, und dabei der schlechteste Lichtechtheitswert bzw. die höchste Farbveränderung zur Steuerung der Beleuchtungsanordnungen herangezogen wird. Alternativ können mehrere Messanordnungen einer Beleuchtungsanordnung bzw. einer Gruppe von Beleuchtungsanordnungen zugeordnet werden. Eine Ansteuerung der Beleuchtungsanordnungen kann dabei individuell oder in Gruppen erfolgen.

Die Erfindung ist nicht auf die vorhergehende Ausführungsform beschränkt, solange sie vom Gegenstand der folgenden Ansprüche umfasst ist. Ferner sind die vorhergehenden Ausführungsalternativen in beliebiger Weise mit und untereinander kombinierbar.

## Patentansprüche

1. Verfahren zur Steuerung einer Beleuchtungsanordnung, insbesondere einer Beleuchtungsanordnung (100) zur Beleuchtung einer Warenpräsentationsfläche (140), umfassend die folgenden Schritte:
- Bereitstellen der Beleuchtungsanordnung (100);
- Bereitstellen eines Musters (120);
und **gekennzeichnet durch** die folgenden Schritte:
- Bereitstellen einer Messanordnung (110) zur Messung von Farbveränderungen des Musters (120) aufgrund der Lichteinwirkungen durch die Beleuchtungsanordnung (100) in dem von der Beleuchtungsvorrichtung (100) zu beleuchtenden Bereich, umfassend eine Sensoranordnung, die geeignet ist, eine Farbveränderung des Musters (120) zu ermitteln;
- Anordnen des Musters (120) derart, dass das Muster (120) dem Licht der Beleuchtungsanordnung (100) ausgesetzt wird;
- Ermitteln der Farbveränderung des Musters (120) durch die Sensoranordnung, nachdem das Muster (120) dem Licht der Beleuchtungsanordnung (100) einer vorbestimmten Dauer ausgesetzt wurde;
- Ansteuern der Beleuchtungsanordnung (100) in Abhängigkeit der durch die Messanordnung (110) ermittelten Farbveränderung des Musters (120).

2. Verfahren nach Anspruch 1, wobei eine Farbveränderung des Musters durch einen Vergleich von Farbwerten einer ersten Farbmessung zu einem ersten Zeitpunkt mit einer Farbmessung zu einem zweiten Zeitpunkt ermittelt wird, wobei die Farbwerte der ersten Farbmessung hierfür vorzugsweise in einer Rechner- und Speichereinheit gespeichert werden.

3. Verfahren nach Anspruch 1 oder 2, wobei eine Farbveränderung des Musters derart ermittelt wird, dass
- das Muster zumindest teilweise abgedeckt wird und somit nur ein Teil des Musters der Beleuchtung ausgesetzt wird und diese beiden Bereiche miteinander verglichen werden, vorzugsweise durch Farbmessungen zu einem Zeitpunkt, und/oder
- das beleuchtete Muster mit einem gleichen, nicht beleuchteten Muster verglichen wird, vorzugsweise durch Farbmessungen zu einem Zeitpunkt.

4. Verfahren nach einem der vorhergehenden Ansprüche, wobei ein vordefiniertes Muster mit bekannten Ausgangsfarbwerten verwendet wird und die Ausgangsfarbwerte als elektronisch gespeicherte Referenzwerte vorliegen, und dass eine Farbveränderung des vordefinierten Musters durch einen Vergleich der Farbwerte des beleuchteten Musters mit den Referenzwerten erfolgt.

5. Verfahren nach einem der vorhergehenden Ansprüche, wobei ferner eine Trägeranordnung (130) in dem von der Beleuchtungsvorrichtung (100) zu beleuchtenden Bereich zur Aufnahme des Musters (120) bereitgestellt wird, wobei die Trägeranordnung (130) vorzugsweise an der Messanordnung (110) vorgesehen ist, wobei der Schritt zur Aufnahme des Musters (120) ferner die Aufnahme des Musters (120) auf der Trägeranordnung (130) umfasst.

6. Verfahren nach einem der vorhergehenden Ansprüche,
- wobei das Muster ein Textilmuster (120) der auf einer Warenpräsentationsfläche (140) angeordneten Textile (150) ist, und/oder
- wobei das Muster (120) ein standardisiertes Muster, insbesondere ein standardisiertes Textilmuster oder ein standardisiertes Papiermuster, ist, wobei das Muster (120) vorzugsweise ein standardisiertes Blaumuster nach DIN 53952 zur Messung einer Lichtechtheit ist.

7. Verfahren nach einem der vorhergehenden Ansprüche, wobei die ermittelte Farbveränderung als Lichtechtheitswert nach dem Blaumaßstab nach DIN 53952 angegeben wird und hierfür die Farbwerte der Wollskala in der Sensoreinheit, der Beleuchtungsanordnung und/oder einer zentralen Rechnereinheit gespeichert sind.

8. Verfahren nach einem der vorhergehenden Ansprüche, wobei ein Ansteuern der Beleuchtungsanordnung (100) ein Einstellen des Lichtausstrahlungswinkels und/oder der Lichtintensität und/oder der Lichtverteilung umfasst.

9. Verfahren nach einem der vorhergehenden Ansprüche, wobei die Beleuchtungsanordnung (100) mehrere Beleuchtungseinrichtungen umfasst.

10. Verfahren nach einem der vorhergehenden Ansprüche,
- wobei die ermittelte Farbveränderung des Musters (120) von der Messanordnung (110) an die Beleuchtungsanordnung (100) übermittelt wird und eine Steuereinheit der Beleuchtungsanordnung (100) die Beleuchtung in Abhängigkeit der ermittelten Farbveränderung ansteuert, und/oder
- wobei die ermittelte Farbveränderung des Musters (120) von der Messanordnung (110) an eine zentrale Rechnereinheit übermittelt wird und die zentrale Rechnereinheit die Beleuchtung der Beleuchtungsanordnung (100) in Abhängigkeit der ermittelten Farbveränderung ansteuert.

11. Verfahren nach einem der vorhergehenden Ansprüche, wobei die Lichtflussdichte des auf die beleuchtete Fläche (140) abgestrahlten Lichts reduziert wird, wenn die ermittelte Farbveränderung über einem bestimmten Referenzwert liegt.

12. Verfahren nach einem der vorhergehenden Ansprüche, wobei die Beleuchtungsanordnung (100), die Messanordnung (110) und/oder die zentrale Rechnereinheit jeweils zumindest eine Schnittstelle zur drahtlosen Kommunikation aufweist, mit der eine ermittelte Farbveränderung übermittelt wird.

13. Verfahren nach einem der vorhergehenden Ansprüche, wobei die Beleuchtungsanordnung (100) zumindest ein Leuchtdioden-Modul umfasst.

14. Anordnung zur Durchführung eines Verfahrens nach einem der Ansprüche 1 bis 13, umfassend:
- eine Beleuchtungsanordnung (100), vorzugsweise mit zumindest einem Leuchdioden-Modul;
**dadurch gekennzeichnet, dass** die Anordnung weiterhin umfasst:
- eine Messanordnung (110) zur Messung von Farbveränderungen eines Musters (120) aufgrund der Lichteinwirkungen durch die Beleuchtungsanordnung (100) in dem von der Beleuchtungsvorrichtung (100) zu beleuchtenden Bereich, umfassend eine Sensoranordnung, die geeignet ist, eine Farbveränderung des Musters (120) zu bestimmen;
- eine Steuereinheit zum Ansteuern der Beleuchtungsanordnung (100) in Abhängigkeit der durch die Messanordnung (110) ermittelten Farbveränderung des Musters (120).

15. Anordnung nach Anspruch 14, ferner aufweisend eine Trägeranordnung (130) zur Aufnahme des Musters (120), wobei die Trägeranordnung (130) derart vorgesehen ist, dass das Muster (120) dem Licht der Beleuchtungsanordnung (100) aussetzbar ist, wobei die Trägeranordnung (130) vorzugsweise an der Messanordnung (110) vorgesehen ist.

## Claims

1. Method for controlling an illumination arrangement, in particular an illumination arrangement for illuminating a merchandise presentation surface, comprising the following steps:
- providing the lighting arrangement (100);
- providing a pattern (120);
and **characterized by** the following steps:
- providing a measuring arrangement (110) for measuring color changes of the pattern (120) due to the effects of light through the illumination arrangement (100) in the region to be illuminated by the illumination arrangement (100), comprising a sensor arrangement which is suitable for determining a color change of the pattern (120);
- arranging the pattern (120) so that the pattern (120) is exposed to the light of the illumination arrangement (100);
- determining the color change of the pattern (120) through the sensor arrangement after the pattern (120) has been exposed to the light of the illumination arrangement (100) for a predetermined duration;
- controlling the illumination arrangement (100) as a function of the color variation of the pattern (120) determined by the measuring arrangement (110).

2. Method according to claim 1, wherein a color change of the pattern is determined by comparing color values of a first color measurement at a first time with a color measurement at a second time, wherein the color values of the first color measurement are preferably stored in a computer and storage unit.

3. Method according to claim 1 or 2, wherein a color change of the pattern is determined in such a way that
- the pattern is at least partially covered and thus only a part of the pattern is exposed to the illumination and these two regions are compared with one another, preferably by color measurements at a point in time, and/or
- the illuminated pattern is compared with a similar, non-illuminated pattern, preferably by color measurements at a point in time.

4. Method according to one of the preceding claims, wherein a pre-defined pattern with known output color values is used, while the output color values are present as electronically-stored reference values, and a color change of the predefined pattern is carried out by comparing the color values of the illuminated pattern with the reference values.

5. Method according to one of the preceding claims, wherein a carrier arrangement (130) is provided in the region to be illuminated by the illumination arrangement (100) to receive the pattern (120), wherein the carrier arrangement (130) is preferably arranged on the measuring arrangement (110), and wherein the step of receiving the pattern (120) further comprises receiving the pattern (120) on the carrier arrangement (130).

6. Method according to one of the preceding claims, wherein
- the pattern is a textile pattern (120) of the textile (150) arranged on a merchandise presentation surface (140), and/or
- the pattern (120) is a standardized pattern, in particular a standardized textile pattern or a standardized paper pattern, wherein the pattern (120) is preferably a standardized blue pattern according to DIN 53952 for measuring a light fastness.

7. Method according to one of the preceding claims, wherein the determined color change is specified as the light fastness value according to the blue scale according to DIN 53952, while the color values of the wool scale are stored in the sensor unit, the lighting arrangement and/or a central computer unit.

8. Method according to one of the preceding claims, wherein controlling the illumination arrangement (100) comprises setting the light emission angle and/or the light intensity and/or the light distribution.

9. Method according to one of the preceding claims, wherein the illumination arrangement (100) comprises a plurality of illumination devices.

10. Method according to one of the preceding claims, wherein
- the determined color change of the pattern (120) is transmitted from the measuring arrangement (110) to the illumination arrangement (100), and a control unit of the illumination arrangement (100) controls the illumination as a function of the determined color change, and/or
- the determined color change of the pattern (120) is transmitted from the measuring arrangement (110) to a central computer unit, and the central computer unit controls the illumination of the illumination arrangement (100) as a function of the determined color change.

11. Method according to one of the preceding claims, wherein
the light flux density of the light emitted onto the illuminated surface (140) is reduced when the determined color change is above a specific reference value.

12. Method according to one of the preceding claims, wherein the illumination arrangement (100), the measuring arrangement (110) and/or the central computer unit each have at least one interface for wireless communication, with which a determined color change is transmitted.

13. Method according to one of the preceding claims, wherein the lighting arrangement (100) comprises at least one light-emitting diode module.

14. Arrangement for carrying out a method according to one of the claims 1 to 13, comprising:
- an illumination arrangement (100), preferably with at least one light-emitting diode module;
**characterized in that**
the arrangement further comprises:
- a measuring arrangement (110) for measuring color changes of a pattern (120) due to the effects of light through the illumination arrangement (100) in the region to be illuminated by the illumination device (100), comprising a sensor arrangement which is suitable for determining a color change of the pattern (120);
- a control unit for controlling the illumination arrangement (100) as a function of the color variation of the pattern (120) determined by the measuring arrangement (110).

15. Arrangement according to claim 14, further comprising a carrier arrangement (130) to receive the pattern (120), wherein the carrier arrangement (130) is provided in such a way that the pattern (120) may be exposed to the light of the illumination arrangement (100) wherein the carrier arrangement (130) is preferably provided on the measuring arrangement (110).

## Revendications

1. Procédé de commande d'un dispositif d'éclairage, plus particulièrement d'un dispositif d'éclairage (100) pour l'éclairage d'une surface de présentation d'articles (140), comprenant les étapes suivantes :
- mise à disposition du dispositif d'éclairage (100) ;
- mise à disposition d'un modèle (120) ;
et **caractérisé par** les étapes suivantes :
- mise à disposition d'un dispositif de mesure (110) pour la mesure de variations de couleurs du modèle (120) dues aux effets de lumière provoqués par le dispositif d'éclairage (100) dans la zone à éclairer par le dispositif d'éclairage (100), comprenant un dispositif de capteur qui est conçu pour déterminer une variation de couleur du modèle (120) ;
- disposition du modèle (120) de façon à ce que le modèle (120) soit exposé à la lumière du dispositif d'éclairage (100) ;
- détermination de la variation de couleur du modèle (120) par le dispositif de capteur, après que le modèle (120) ait été exposé à la lumière du dispositif d'éclairage (100) pendant une durée prédéterminée ;
- commande du dispositif d'éclairage (100) en fonction des variations de couleurs du modèle (120) déterminé par le dispositif de mesure (110).

2. Procédé selon la revendication 1, une variation de couleur du modèle est déterminée à l'aide d'une comparaison de valeurs chromatiques d'une première mesure de couleurs à un premier moment avec une mesure de couleur à un deuxième moment, les valeurs chromatiques de la première mesure de couleur étant enregistrées pour cela de préférence dans une unité de calcul et de mémoire.

3. Procédé selon la revendication 1 ou 2, une variation de couleur du modèle étant déterminée de façon à ce que
- le modèle est recouvert au moins partiellement et seule une partie du modèle est exposée à l'éclairage et ces deux zones sont comparées entre elles, de préférence par mesures de couleurs à un moment donné et/ou
- le modèle éclairé est comparé avec un modèle identique non éclairé, de préférence par des mesures de couleurs à un moment donné.

4. Procédé selon l'une des revendications précédentes, un modèle prédéfini avec des valeurs chromatiques de sortie connues étant utilisé et les valeurs chromatiques de sortie existant sous forme de valeurs de référence stockées électroniquement et une variation de couleur du modèle prédéfini ayant lieu par une comparaison des valeurs chromatiques du modèle éclairé avec les valeurs de référence.

5. Procédé selon l'une des revendications précédentes, un dispositif de support (130) étant en outre mis à disposition pour le logement du modèle (120) dans la zone à éclairer par le dispositif d'éclairage (100), le dispositif de support (130) étant prévu de préférence sur le dispositif de mesure (110), l'étape de logement du modèle (120) comprenant en outre le logement du modèle (120) sur le dispositif de support (130).

6. Procédé selon l'une des revendications précédentes,
- le modèle étant un modèle textile (120) qui est constitué de textiles (150) disposés sur une surface de présentation d'articles (140) et/ou
- le modèle (120) étant un modèle standardisé, plus particulièrement un modèle textile standardisé ou un modèle papier standardisé, le modèle (120) étant de préférence un modèle bleu standardisé selon DIN 53952 pour la mesure d'une résistance à la lumière.

7. Procédé selon l'une des revendications précédentes, la variation de couleur déterminée comme une valeur de résistance à la lumière étant indiquée selon l'échelle de bleu selon DIN 53952 et les valeurs chromatiques de l'échelle de laine étant pour cela stockées dans l'unité de capteur, du dispositif d'éclairage et/ou dans une unité centrale de calcul.

8. Procédé selon l'une des revendications précédentes, une commande du dispositif d'éclairage (100) comprenant un réglage de l'angle d'émission de lumière et/ou de l'intensité lumineuse et/ou de la distribution de la lumière.

9. Procédé selon l'une des revendications précédentes, le dispositif d'éclairage (100) comprenant plusieurs dispositifs d'éclairage.

10. Procédé selon l'une des revendications précédentes,
- la variation de couleur du modèle (120) déterminée étant transmise par le dispositif de mesure (110) au dispositif d'éclairage (100) et une unité de commande du dispositif d'éclairage (100) contrôlant l'éclairage en fonction de la variation de couleur déterminée et/ou
- la variation de couleur du modèle (120) déterminée étant transmise par le dispositif de mesure (110) à une unité centrale de calcul et l'unité centrale de calcul contrôlant l'éclairage du dispositif d'éclairage (100) en fonction de la variation de couleur déterminée.

11. Procédé selon l'une des revendications précédentes, la densité de flux lumineux de la lumière émise sur la surface éclairée (140) étant réduite lorsque la variation de couleur déterminé se trouve au-dessus d'une valeur de référence déterminée.

12. Procédé selon l'une des revendications précédentes, le dispositif d'éclairage (100), le dispositif de mesure (110) et/ou l'unité centrale de calcul comprenant chacun au moins une interface pour la communication sans fil, avec laquelle une variation de couleur déterminée est transmise.

13. Procédé selon l'une des revendications précédentes, le dispositif d'éclairage (100) comprenant au moins un module à diode électroluminescente.

14. Dispositif pour l'exécution d'un procédé selon l'une des revendications 1 à 13, comprenant :
- un dispositif d'éclairage (100), de préférence avec au moins un module à diode électroluminescente ;
**caractérisé en ce que** le dispositif comprend en outre :
- un dispositif de mesure (110) pour la mesure de variations de couleurs d'un modèle (120) dues aux effets de la lumière provoqués parle dispositif d'éclairage (100) dans la zone à éclairer par le dispositif d'éclairage (100), comprenant un dispositif de capteur qui est conçu pour déterminer une variation de couleur du modèle (120) ;
- une unité de commande pour la commande du dispositif d'éclairage (100) en fonction de la variation de couleur du modèle (120) déterminé par le dispositif de mesure (110).

15. Dispositif selon la revendication 14, comprenant en outre un dispositif de support (130) pour le logement du modèle (120), le dispositif de support (130) étant prévu de façon à ce que le modèle (120) puisse être exposé à la lumière du dispositif d'éclairage (100), le dispositif de support (130) étant prévu de préférence sur le dispositif de mesure (110).
